# EUROPEAN PATENT SPECIFICATION

(11) **EP 3 156 521 B1**
(45) Date of publication and mention of the grant of the patent: **14.11.2018**
(21) Application number: 16188766.6
(22) Date of filing: 14.09.2016
(51) Int. Cl.: C25D 1/02, B29C 33/56, C25D 7/04

(54) **MOLD AND MANUFACTURING METHOD THEREOF**
FORM UND HERSTELLUNGSVERFAHREN DAFÜR
MOULE ET SON PROCÉDÉ DE FABRICATION

(30) Priority: 14.10.2015 JP 2015202779; 12.03.2016 JP 2016049052
(43) Date of publication of application: 19.04.2017
(73) Proprietor: KTX Corporation, Konan-shi, Aichi 483-8111 (JP)
(72) Inventor: SATO, Katsuya, c/o KTX CORPORATION, Konan-shi, Aichi 483-8111 (JP)
(74) Representative: TBK

(56) References cited:
- EP-A2- 0 329 340
- DE-C1- 3 129 626
- JP-A- H07 227 851

## Description

### TECHNICAL FIELD

The present invention relates to molds that are used to mold a resin, a rubber, etc., and more particularly to configurations of fluid passages through which fluid for temperature control flows.

### BACKGROUND ART

In molds that are used to mold a resin, a rubber, etc., a metal pipe is attached to the back surface of the mold so that fluid for temperature control such as oil or water flows therethrough for temperature control (in order to heat the mold before molding and cool the mold after molding, etc.). The following attachment structures (1) to (3) of the metal pipe are known in the art.
(1) The metal pipe is bent and placed to extend on the back surface of the mold. A part of the metal pipe is held by a thin metal sheet, and the metal sheet is fixed by spot welding.
(2) The metal pipe is bent and placed to extend on the back surface of the mold. The metal pipe is fixed by metal welding with silver solder etc.
(3) The metal pipe is bent and placed to extend on the back surface of the mold. The metal pipe is temporarily fixed by a wire mesh etc. and is then fixed by electroforming (Patent Document 1) .

However, these structures have the following problems.

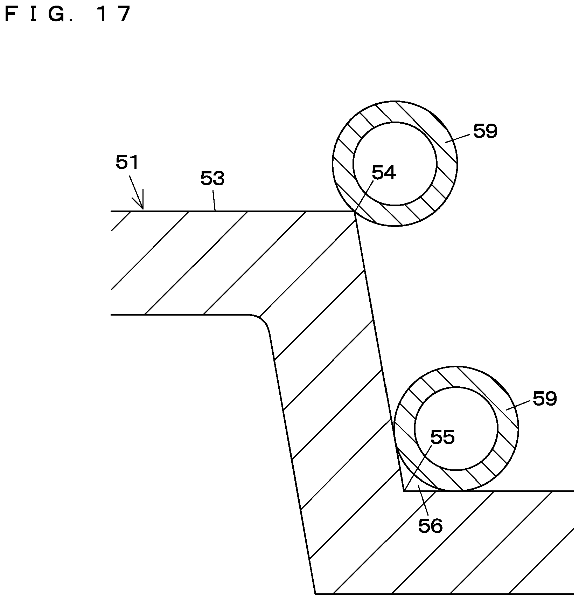

The rigid metal pipe need be bent to conform to the shape of the back surface of the mold. Due to limited conformity of the metal pipe to the shape of the back surface of the mold, the metal pipe does not completely contact the metal mold (insufficient adhesion), which causes loss of heat conduction. As shown in FIG. 17, if a metal pipe 59 is placed on a projecting corner 54 of a back surface 53 of a mold body 51, the metal pipe 59 line-contacts the projecting corner 54. If the metal pipe 59 is placed on a recessed corner 55 of the back surface 53 of the mold body 51, a gap 56 appears between the metal pipe 59 and the recessed corner 55. In either case, heat is less likely to be conducted, resulting in low temperature control efficiency.

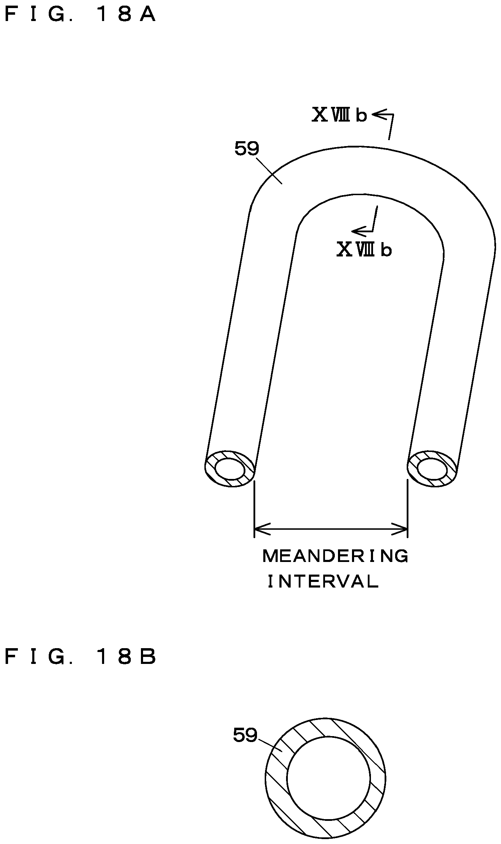

As shown in FIG. 18A, in bending of the metal pipe 59, reduction in bending radius is limited (as there is a minimum bending radius depending on the diameter) . The metal pipe 59 therefore need be bent to meander at certain intervals or more. As shown in FIG. 18B, the metal pipe 59 is thinner on the outside of the bend.

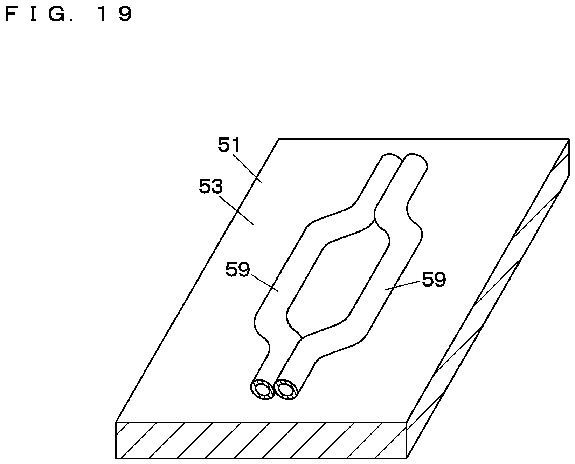

As shown in FIG. 19, in the case of forming a branched fluid passage by using the metal pipe 59, a plurality of metal pipes 59 are required, and an operation of connecting the plurality of metal pipes 59 is also required.

Since the metal pipe is positioned on the back surface of the mold, the metal pipe cannot be provided at a desired position (distance) from the front surface (molding surface) of the mold.

In the attachment structure (2), metal welding is performed along the metal pipe. Accordingly, the mold may be deformed by welding heat.

The following structure (4) is also known in the art as a structure in which a fluid passage is formed without using a metal pipe.

(4) After a volatile material such as wax is placed on the back surface of the mold or after a groove formed by machining the back surface of the mold is filled with the volatile material, electroforming is performed and finally the volatile material is removed to form a fluid passage (Patent Documents 2 and 3).

In this structure, however, the volatile material need be removed in a later step. Moreover, it is difficult to remove the volatile material in the case where the fluid passage has a complicated shape. Further prior art is discussed in Patent Document 4, which teaches a member with a plurality of fluid passages obtained by electrodepositing a metal on the member including a plurality of ridge portions. During electrodeposition, the metal preferably deposits on the edges and thereby seals the surface, creating internal passages.

### CITATION LIST

### Patent Document

[Patent Document 1] Japanese Patent Application Publication No. H07-227851 (JP H07-227851 A)
[Patent Document 2] Japanese Patent Application Publication No. 2014-205318 (JP 2014-205318 A)
[Patent Document 3] Japanese Patent Application Publication No. 2014-205319 (JP 2014-205319 A)
[Patent Document 4] EP 0 329 340 A2

### SUMMARY OF INVENTION

### Technical Problem

It is an object of the present invention to provide a mold that increases flexibility in three-dimensional design of a fluid passage, that does not cause loss of heat conduction due to insufficient adhesion as in the conventional metal pipes, and that causes no trouble or difficulty in removing a material like the conventional volatile material such as wax.

### Solution to Problem

A mold according to the present invention includes: a mold body; a fluid passage through which fluid for temperature control flows; a porous conductive sheet placed on a back surface of the moldbody, having a plurality of through holes, and being conductive at least at its surface; and an electroformed metal electrodeposited on the back surface of the mold body and on the porous conductive sheet so as to fill and close the through holes of the porous conductive sheet. In the mold, an inner surface of the electroformed metal forms at least a part of an inner surface of the fluid passage.

A method for manufacturing a mold according to the present invention includes the steps of: placing a porous conductive sheet having a plurality of through holes and being conductive at least at its surface on a back surface of a mold body; and performing electroforming to cause an electroformed metal to be electrodeposited on the back surface of the mold body and on the porous conductive sheet so as to fill and close the through holes of the porous conductive sheet so that an inner surface of the electroformed metal forms at least a part of an inner surface of a fluid passage through which fluid for temperature control flows.

### [Functions]

(i) Since the porous conductive sheet is more flexible than conventional rigid metal pipes, the porous conductive sheet can be easily bent and placed so as to closely conform to the back surface of the mold body. The porous conductive sheet placed on the back surface of the mold body serves as a base for electrodeposition of the electroformed metal, and an electroforming solution can flow through the plurality of through holes. Accordingly, the electroformed metal is electrodeposited not only on the outer surface of the porous conductive sheet but also on the inner surface thereof.
(ii) The electroformed metal electrodeposited on the porous conductive sheet so as to fill and close the through holes in the porous conductive sheet conforms to the shape of the porous conductive sheet bent as described above. The electroformed metal is also electrodeposited on the back surface of the mold body through the porous conductive sheet, so that the electroformed metal is integrated with the back surface of the mold body.
(iii) The inner surface of the electroformed metal forms at least a part of the inner surface of the fluid passage. This increases flexibility in three-dimensional design of the fluid passage and eliminates loss of thermal conduction due to insufficient adhesion as in the conventional metal pipes.
(iv) The electroforming solution that is present inside the electroformed metal can be easily removed after electroforming. Accordingly, there is no trouble or difficulty in removing a material like the conventional volatile material such as wax.

For example, the fluid passage may have the following configuration (1) or (2).
(1) A groove is formed in the back surface of the mold body, the porous conductive sheet is placed on the back surface of the mold body so as to cover the groove, and the inner surface of the electroformed metal electrodeposited on a part of the porous conductive sheet which covers the groove and an inner surface of the groove form the inner surface of the fluid passage. This example (1) may have the following configuration (a) or (b).
   (a) The part of the porous conductive sheet which covers the groove and the electroformed metal electrodeposited on that part of the porous conductive sheet have a flat shape.
   (b) The part of the porous conductive sheet which covers the groove and the electroformed metal electrodeposited on that part of the porous conductive sheet are curved in a direction away from the mold body.

   In the example (1), the fluid passage can be provided at a desired position (distance) from the front surface (molding surface) of the mold by increasing or decreasing the depth of the groove.
(2) The porous conductive sheet includes two contact portions in contact with the back surface of the mold body and a curved portion located between the two contact portions and curved in a direction away from the mold body, and the inner surface of the electroformed metal electrodeposited on the curved portion and curved in the direction away from the mold body and the back surface of the mold body form the inner surface of the fluid passage.

The curved portion of the porous conductive sheet may be in contact with a partition wall attached to the back surface of the mold body.

Although the shape of the fluid passage and the position of the fluid passage on the back surface of the mold body are not particularly limited, the fluid passage may be formed in the following forms (a) to (g).
(a) A meandering fluid passage
(b) A fluid passage that splits into branches at an intermediate position
(c) A fluid passage that splits into branches at an intermediate position and merges back into the single fluid passage
(d) A fluid passage that contacts substantially an entire predetermined surface of a projecting portion formed in the back surface of the mold body
(e) A fluid passage that contacts substantially the entire back surface of the mold body
(f) A fluid passage that extends along a projecting corner of a projecting portion formed in the back surface of the mold body
(g) A fluid passage that extends along a recessed corner of a projecting portion formed in the back surface of the mold body

The method for manufacturing a mold according to the present invention includes the following form (1), (2), or (3).
(1) The method further includes the step of: forming, before the sheet placing step, a groove in the back surface of the mold body. In the sheet placing step, the porous conductive sheet is placed on the back surface of the mold body so as to cover the groove, and in the electroforming step, the inner surface of the electroformed metal electrodeposited on a part of the porous conductive sheet which covers the groove and an inner surface of the groove form the inner surface of the fluid passage.
   In the groove forming step, the back surface of the mold body may be machined to form the groove, or the back surface of the mold body may be machined to form a recess and a partition wall may be attached to the recess to form the groove. The type of machining is not particularly limited, and known cutting, electrical discharge machining, etc. may be used.
(2) In the sheet placing step, the porous conductive sheet is placed such that two contact portions of the porous conductive sheet contact the back surface of the mold body and a portion of the porous conductive sheet which is located between the contact portions is curved in a direction away from the mold body, and in the electroforming step, the inner surface of the electroformed metal electrodeposited on the curved portion of the porous conductive sheet and curved in the direction away from the mold body and the back surface of the mold body form the inner surface of the fluid passage.
   In the sheet placing step, the porous conductive sheet may be placed such that the curved portion of the porous conductive sheet contacts a partition wall attached to the back surface of the mold body.
(3) In the sheet placing step, the porous conductive sheet is temporarily fixed to the back surface of the mold body.

### Advantageous Effects of Invention

The present invention is thus advantageous in that it increases flexibility in three-dimensional design of a fluid passage, it does not cause loss of heat conduction due to insufficient adhesion as in the conventional metal pipes, and it causes no trouble or difficulty in removing a material like the conventional volatile material such as wax.

### BRIEF DESCRIPTION OF DRAWINGS

FIGS. 1A1 to 1D2 show a method for manufacturing a mold according to a first embodiment, where FIGS. 1A1 and 1A2 show a perspective view and a partial sectional view of a formed mold body as viewed from the back, FIGS. 1B1 and 1B2 show a perspective view and a partial sectional view of the mold body having a groove formed therein, FIGS. 1C1 and 1C2 show a perspective view and a partial sectional view of the mold body with a wire mesh placed thereon, and FIGS. 1D1 and 1D2 show a perspective view and a partial sectional view of a mold with an electroformed metal formed thereon;
FIG. 2A is a partial sectional view showing an initial state in the case of forming the electroformed metal, FIG. 2B is a partial sectional view showing a state during electrodeposition of the electroformed metal, FIG. 2C is a partial sectional view showing a state where mesh openings in the wire mesh are closed by the electroformed metal, FIG. 2D is a partial sectional view showing a comparative example in which a thin stainless steel sheet is used instead of the wire mesh;
FIG. 3A is a partial sectional view of a mold according to a second embodiment, and FIG. 3B is a partial sectional view of a mold according to a third embodiment;
FIG. 4A is a partial perspective view of a mold according to a fourth embodiment, FIG. 4B is a sectional view taken along line IVb-IVb in FIG. 4A, and FIG. 4C is a sectional view taken along line IVc-IVc in FIG. 4A;
FIG. 5 is a partial perspective view of a mold according to a modification of the fourth embodiment;
FIG. 6A is a partial perspective view of a mold according to a fifth embodiment, FIG. 6B is a sectional view taken along line VIb-VIb in FIG. 6A, and FIG. 6C is a sectional view taken along line VIc-VIc in FIG. 6A;
FIG. 7A is a partial perspective view of a mold according to a sixth embodiment, FIG. 7B is a sectional view taken along line VIIb-VIIb in FIG. 7A;
FIG. 8A is a partial perspective view of a mold according to a seventh embodiment, FIG. 8B is a sectional view taken along line VIIIb-VIIIb in FIG. 8A;
FIG. 9A is a partial perspective view of a mold according to an eighth embodiment, FIG. 9B is a sectional view taken along line IXb-IXb in FIG. 9A;
FIG. 10A is a partial perspective view of a mold according to a modification of the eighth embodiment, FIG. 10B is a sectional view taken along line Xb-Xb in FIG. 10A;
FIG. 11A is a partial perspective view of a mold according to a ninth embodiment, FIG. 11B is a sectional view taken along line XIb-XIb in FIG. 11A;
FIG. 12A is a partial perspective view of a mold according to a tenth embodiment, FIG. 12B is a sectional view taken along line XIIb-XIIb in FIG. 12A;
FIG. 13A is a partial perspective view of a mold according to an eleventh embodiment, FIG. 13B is a sectional view taken along line XIIIb-XIIIb in FIG. 13A;
FIG. 14A is a partial perspective view of a mold according to a twelfth embodiment, FIG. 14B is a sectional view taken along line XIVb-XIVb in FIG. 14A;
FIG. 15 is a partial sectional view of a mold according to a thirteenth embodiment;
FIG. 16 is a partial sectional view of a mold according to a fourteenth embodiment;
FIG. 17 is a partial sectional view of a mold according to a conventional example;
FIG. 18A is a partial perspective view of a bent metal pipe that is used in another conventional example, and FIG. 18B is a sectional view taken along line XVIIIb-XVIIIb in FIG. 18A; and
FIG. 19 is a partial perspective view of a mold of still another conventional example.

### DESCRIPTION OF EMBODIMENTS

### 1. Mold

Examples of the mold include molds that are used for various kinds of molding of resins, rubbers, elastomers, etc. Examples of the molding include press molding, injection molding, slush molding, vacuum molding, rotational molding, blow molding, reaction injection molding (RIM), stamping molding, cast molding, and foam molding.

### 2. Mold body

The material of the mold body and the type of the mold body depending on the manufacturing method are not particularly limited. Examples of the mold body include an electroformed mold made of nickel, copper, etc., a cut mold made of carbon steel, stainless steel, nickel steel, etc., and a cast mold and a sheet metal mold made of cast iron, copper, brass, etc.

### 3. Porous conductive sheet

The porous conductive sheet having a plurality of through holes and being conductive at least at its surface is not particularly limited. Examples of the porous conductive sheet are as follows.

### (1) Wire mesh

A wire mesh is a woven mesh of metal wire. A large number of mesh openings in the wire mesh correspond to a plurality of through holes.

The material of the metal wire is not particularly limited. Examples of the material of the metal wire include iron, carbon steel, stainless steel, copper, and nickel. The metal wire is preferably made of the same material as an electroformed metal (e.g., a nickel wire for nickel electroforming, and a copper wire for copper electroforming).

### (2) Mesh of conductive wire other than metal wire

A mesh of conductive wire is a woven mesh of carbon wire etc. A large number of mesh openings in the mesh correspond to the plurality of through holes.

### (3) Metal lath (expanded metal)

A metal lath is a metal sheet formed by making a large number of cuts in a metal sheet and stretching the metal sheet to form mesh openings. The large number of mesh openings in the metal lath correspond to the plurality of through holes.

### (4) Punching metal

A metal sheet having a plurality of through holes formed by a punch press.

### (5) Mesh of non-conductive wire having a conductive layer at its surface

Examples of the material of the non-conductive wire include a resin, an organic fiber yarn, and an inorganic fiber yarn. Examples of the conductive layer include a metal plated layer, a coating layer of a conductive coating material, a silver mirror layer, a vacuum deposited metal layer, and a sputtered metal layer .

### (6) Perforated resin sheet having a conductive layer at its surface

This perforated resin sheet is a resin sheet having a plurality of through holes formed by molding. Examples of the conductive layer include layers similar to those listed above.

Although the size of the through holes in the porous conductive sheet is not particularly limited, the opening size or the hole diameter is preferably 0.1 to 1.0 mm, and more preferably 0.2 to 0.5 mm. An electroforming solution is less likely to enter the through holes if the through holes are too small. The through holes are less likely to be filled with the electroforming solution if the through holes are too large.

Although the number of through holes is not particularly limited, the number of through holes per unit area of the porous conductive sheet is preferably 25 through holes/cm².

It is preferable that the porous conductive sheet placed on the back surface of the mold body be temporarily fixed to the back surface of the mold body. For example, the porous conductive sheet can be temporarily fixed to the back surface of the mold body by a spot welded portion, a spot bonded portion using an adhesive, etc.

### 4. Electroformed metal

The material of the electroformed metal is not particularly limited. Examples of the electroformed metal include nickel (including alloys such as a nickel-cobalt alloy) and copper (including alloys such as a copper-cobalt alloy).

### [Embodiments]

Embodiments of a mold of the present invention will be described with reference to the accompanying drawings. The materials, configurations, and numerical values shown in the embodiments are by way of example only and can be changed as appropriate.

### [First Embodiment]

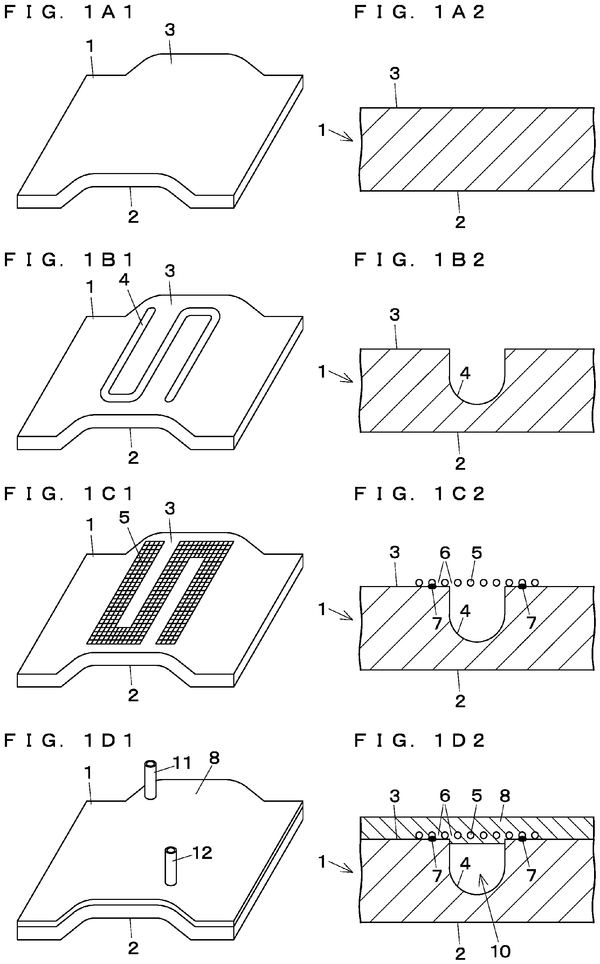

FIGS. 1A1 to 1D2 and 2A to 2D show a mold of a first embodiment and a manufacturing method thereof. As shown in FIGS. 1D1 and 1D2, this mold includes a mold body 1, a wire mesh 5 placed on the back surface of the mold body 1 and serving as a porous conductive sheet, and an electroformed metal 8 electrodeposited on the wire mesh 5 so as to fill a plurality of through holes in the wire mesh 5.

The mold body 1 is made of nickel and has a thickness of 15 mm. The mold body 1 has a front surface (molding surface) 2 that is recessed in the middle, and a back surface 3 that protrudes in the middle. The back surface 3 has a groove 4 that meanders extensively. The groove 4 has a depth of 10 mm and a width of 10 mm.

The wire mesh 5 serving as a porous conductive sheet is a 60-mesh wire mesh of stainless steel wire with a wire diameter of 0.14 mm and an opening size of 0.28 mm. A large number of mesh openings 6 in the wire mesh 5 correspond to the plurality of through holes. The wire mesh 5 is in the shape of a meandering strip. The wire mesh 5 is placed on the back surface 3 of the mold body 1 so as to flatly cover the groove 4, and is temporarily fixed to the back surface 3 of the mold body 1 on both sides of the groove 4 by spot welded portions 7.

The electroformed metal 8 is a nickel layer electrodeposited on the back surface 3 of the mold body 1 and on the wire mesh 5 so as to fill mesh openings 6 in the wire mesh 5 and having a thickness of about 3 mm. The electroformed metal 8 electrodeposited on the part of the wire mesh 5 which covers the groove 4 has a flat shape. The electroformed metal 8 electrodeposited on the wire mesh 5 on both sides of the groove 4 is also electrodeposited on the back surface 3 of the mold body 1 through the mesh openings 6, so that the electroformed metal 8 is integrated with the back surface 3 of the mold body 1.

The inner surface of the electroformed metal 8 electrodeposited on the part of the wire mesh 5 which covers the groove 4 and the inner surface of the groove 4 form the inner surface of a meandering fluid passage 10. The distance between the front surface 2 of the mold body 1 and the fluid passage 10 is 5 mm. An inlet pipe 11 and an outlet pipe 12 are attached to both ends of the fluid passage 10 so as to extend through and project from the electroformed metal 8, so that fluid for temperature control can flow therethrough.

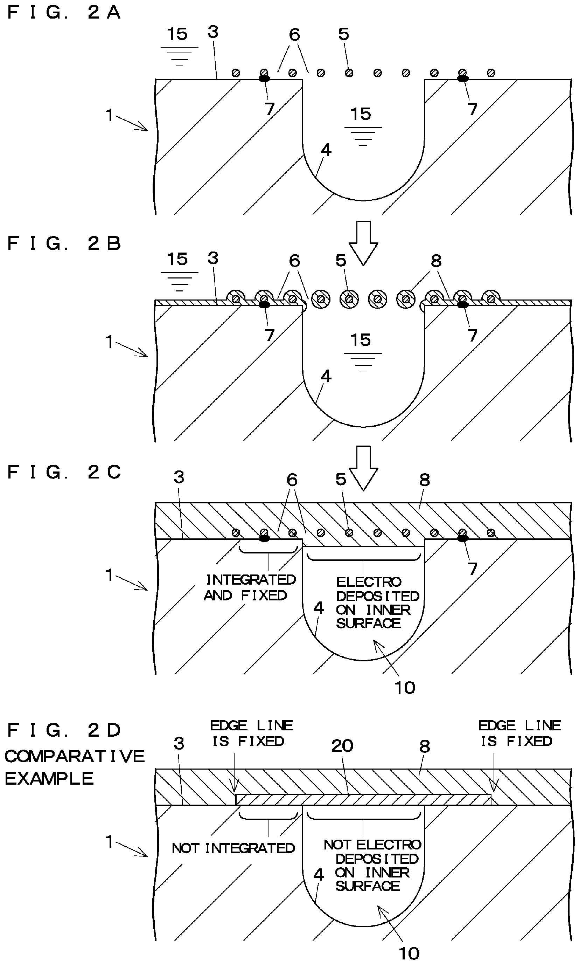

A method for manufacturing the mold will be described sequentially.
(1) Mold body forming step: as shown in FIGS. 1A1 and 1A2, the mold body 1 is formed by a known method (e.g., nickel electroforming).
(2) Groove forming step: as shown in FIGS. 1B1 and 1B2, the back surface 3 of the mold body 1 is machined to form the groove 4.
(3) Sheet placing step: as shown in FIGS. 1C1 and 1C2, the wire mesh 5 is placed on the back surface 3 of the mold body 1 and is temporarily fixed thereto by the spot welded portions 7. The spot welded portions 7 are formed by pressing an electrode (not shown) of a spot welding machine against a desired part of the wire mesh 5 and applying a current between the electrode and the mold body 1. Only a small amount of heat is used in the spot welding, and the mold body 1 is hardly affected by the heat.
(4) Electroforming step: as shown in FIGS. 1D1 and 1D2, the electroformed metal 8 is formed on the back surface 3 of the mold body 1 and on the wire mesh 5 by known electroforming. The process of this electroforming is shown in FIGS. 2A to 2C. As shown in FIG. 2A, an electroforming solution 15 also enters the groove 4 through the mesh openings 6 of the wire mesh 5. Accordingly, as shown in FIG. 2B, the electroformed metal 8 is also electrodeposited on the inner surface of the wire mesh 5, and eventually fills and closes the mesh openings 6 as shown in FIG. 2C. Since the electroformed metal 8 is also electrodeposited on the back surface 3 of the mold body 1 through the mesh openings 6 of the wire mesh 5, the electroformed metal 8 and the wire mesh 5 surface-contact the back surface 3 of the mold body 1 and are fixed thereto. This increases strength and improves thermal coupling properties.

A comparative example shown in FIG. 2D uses an imperforate thin stainless steel sheet 20 instead of the wire mesh. In this case, the electroformed metal 8 is not electrodeposited on the inner surface of the stainless steel sheet 20. Accordingly, both edge lines of the stainless steel sheet 20 are fixed to the back surface 3 of the mold body 1. This reduces strength and degrades the thermal coupling properties.

The present embodiment has the following functions and effects.
(i) Since the wire mesh 5 is more flexible than conventional rigid metal pipes, the wire mesh 5 can be easily bent and placed so as to closely conform to the back surface 3 of the mold body 1. The wire mesh 5 placed on the back surface 3 of the mold body 1 serves as a base for electrodeposition of the electroformed metal 8, and the electroforming solution 15 can flow through the plurality of mesh openings 6. Accordingly, the electroformed metal 8 is electrodeposited not only on the outer surface of the wire mesh 5 but also on the inner surface thereof.
(ii) The electroformed metal 8 electrodeposited on the wire mesh 5 so as to fill and close the mesh openings 6 in the wire mesh 5 conforms to the shape of the wire mesh 5 bent as described above. The electroformed metal 8 is also electrodeposited on the back surface 3 of the mold body 1 through the wire mesh 5, so that the electroformed metal 8 is integrated with the back surface 3 of the mold body 1.
(iii) The inner surface of the electroformed metal 8 and the inner surface of the groove 4 form the inner surface of the fluid passage 10. This increases flexibility in three-dimensional design of the fluid passage 10 and eliminates loss of thermal conduction due to insufficient adhesion as in the conventional metal pipes.
(iv) The electroforming solution 15 that is present inside the electroformed metal 8 can be easily removed after electroforming. Accordingly, there is no trouble or difficulty in removing a material like the conventional volatile material such as wax.
(v) The distance between the front surface 2 of the mold body 1 and the fluid passage 10 is 5 mm. However, this distance can be changed as desired by increasing or decreasing the depth of the groove 4.

### [Second Embodiment]

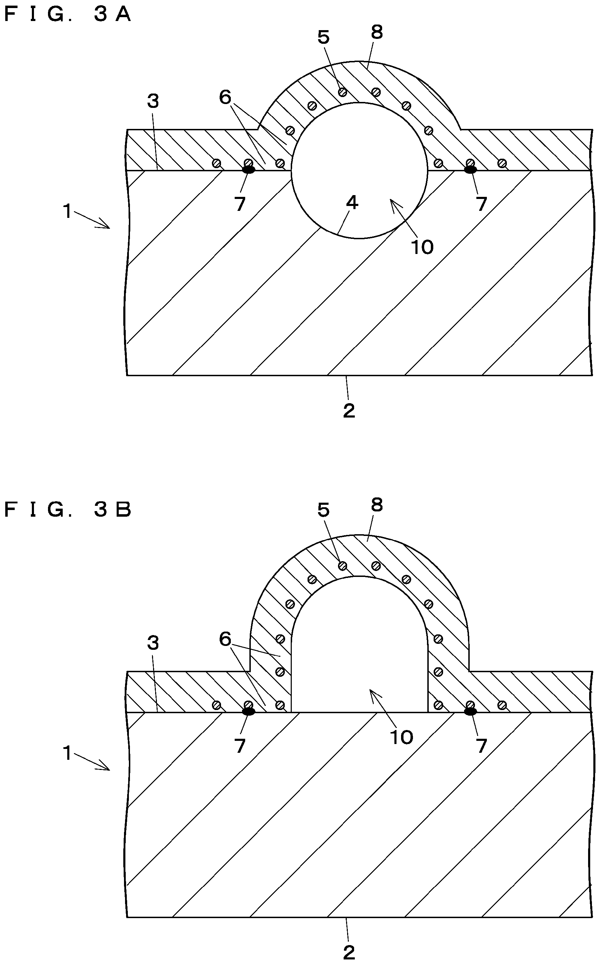

A mold of a second embodiment is different from the first embodiment in the following points, and the configuration of the mold of the second embodiment and a manufacturing method thereof are otherwise the same as the first embodiment. FIG. 3A shows a main part of the mold of the second embodiment. The groove 4 formed in the back surface 3 of the mold body 1 has a depth of 5 mm. A part of the wire mesh 5 which covers the groove 4 and the electroformed metal 8 electrodeposited on this part of the wire mesh 5 are curved in a direction away from the mold body 1. The apex of the inner surface of the electroformed metal 8 is located at a height of 5 mm from the back surface 3 of the mold body 1. The distance between the front surface 2 of the mold body 1 and the fluid passage 10 is 10 mm. The second embodiment also has similar functions and effects to the first embodiment.

### [Third Embodiment]

A mold of a third embodiment is different from the first embodiment in the following points, and the configuration of the mold of the third embodiment and a manufacturing method thereof are otherwise the same as the first embodiment. FIG. 3B shows a main part of the mold of the third embodiment. No groove is formed in the back surface 3 of the mold body 1. The wire mesh 5 includes two contact portions placed in contact with the back surface 3 of the mold body 1 and temporarily fixed thereto by the spot welded portions 7 in the sheet placing step, and a curved portion located between the two contact portions and curved in a direction away from the mold body 1 in the sheet placing step. The electroformed metal 8 electrodeposited on the curved portion is also curved in the direction away from the mold body 1, and the inner surface of the electroformed metal 8 and the back surface 3 of the mold body 1 form the inner surface of the meandering fluid passage 10. The apex of the inner surface of the electroformed metal 8 is located at a height of 10 mm from the back surface 3 of the mold body 1. The distance between the front surface 2 of the mold body 1 and the fluid passage 10 is 15 mm. The third embodiment also has similar functions and effects to the first embodiment.

Each of fourth to fourteenth embodiments described below is different from the first embodiment etc. in the following points, and the configuration of each of the fourth to fourteenth embodiments and a manufacturing method thereof are otherwise the same as the first embodiment. The fourth to fourteenth embodiments have similar functions and effects to the first embodiment.

### [Fourth Embodiment and its Modification]

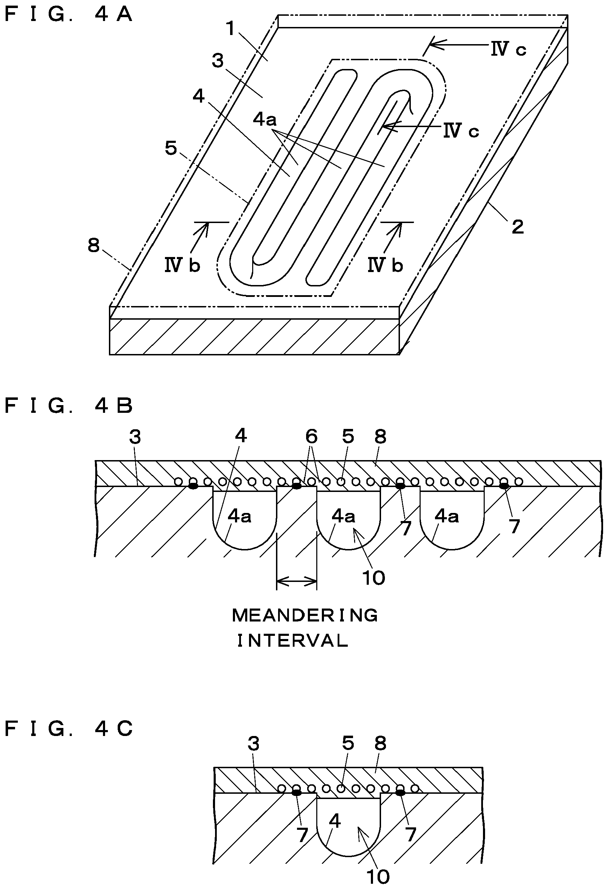

A mold of the fourth embodiment shown in FIGS. 4A to 4C is different from the first embodiment in that the fluid passage 10 meanders at smaller intervals (this can also be implemented in the second embodiment) . The bends of the meandering groove 4 have a smaller width than in the first embodiment. The wire mesh 5 is in the shape of a wide strip and does not meander like the first embodiment. The wire mesh 5 is placed on the back surface 3 of the mold body 1 so as to cover a plurality of groove elements 4a arranged next to each other by the meandering of the groove 4, and is temporarily fixed to the back surface 3 of the mold body 1 on both sides of each groove element 4a by the spot welded portions 7. The inner surface of the electroformed metal 8 electrodeposited on the part of the wire mesh 5 which covers the groove 4 and the inner surface of the groove 4 form the inner surface of the meandering fluid passage 10.

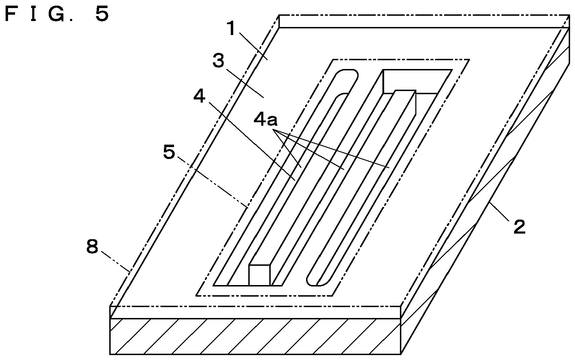

The groove 4 can be easily formed by machining. The width of the bends of the meandering groove 4 can therefore be reduced as compared to the case of bending a metal pipe as described above (FIG. 18A). The fluid passage 10 can thus be formed to meander at smaller intervals. The intervals at which the fluid passage 10 meanders as shown in FIG. 4B are equal to or smaller than the width of the fluid passage 10. As described above, a metal pipe tends to be thinner on the outside of a bend (FIG. 18B). However, as shown in FIG. 4C, the groove 4 does not have such a problem on the outside of the bends. The groove 4 may be bent in an angular U-shape as in a modification shown in FIG. 5.

### [Fifth Embodiment]

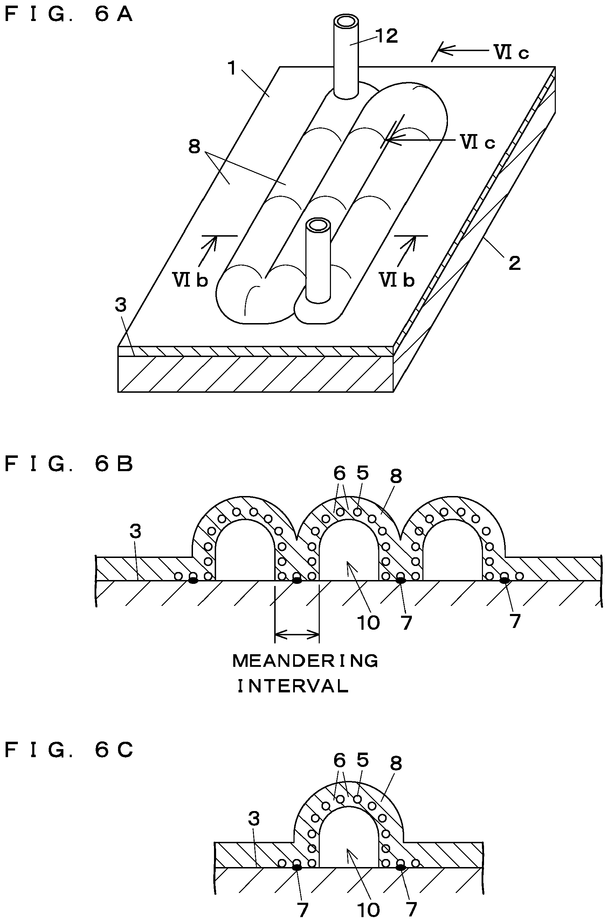

A mold of a fifth embodiment shown in FIGS. 6A to 6C is different from the third embodiment in that the fluid passage 10 meanders at smaller intervals as in the fourth embodiment (this can also be implemented in the second embodiment) . The wire mesh 5 is in the shape of a wide strip. The wire mesh 5 includes two contact portions placed in contact with the back surface 3 of the mold body 1 and temporarily fixed thereto by the spot weldedportions 7 in the sheet placing step, and a curved portion located between the two contact portions and curved in a direction away from the mold body 1 in the sheet placing step. The curved portion is formed so as to meander as viewed in plan, and the contact portions and the curved portions are alternately arranged in the lateral direction as viewed in section in FIG. 6B. The inner surface of the electroformed metal 8 electrodeposited on the curved portion and the inner surface of the groove 4 form the inner surface of the meandering fluid passage 10.

Since the wire mesh 5 can be flexibly deformed, the width of the bends of the meander can be reduced as compared to the case of bending a metal pipe as described above (FIG. 18A). The fluid passage 10 can thus be formed to meander at smaller intervals. The intervals at which the fluid passage 10 meanders as shown in FIG. 6B are equal to or smaller than the width of the fluid passage 10. As described above, a metal pipe tends to be thinner on the outside of a bend (FIG. 18B). However, as shown in FIG. 6C, the wire mesh 5 and the electroformed metal 8 do not have such a problem on the outside of the bends.

### [Sixth Embodiment]

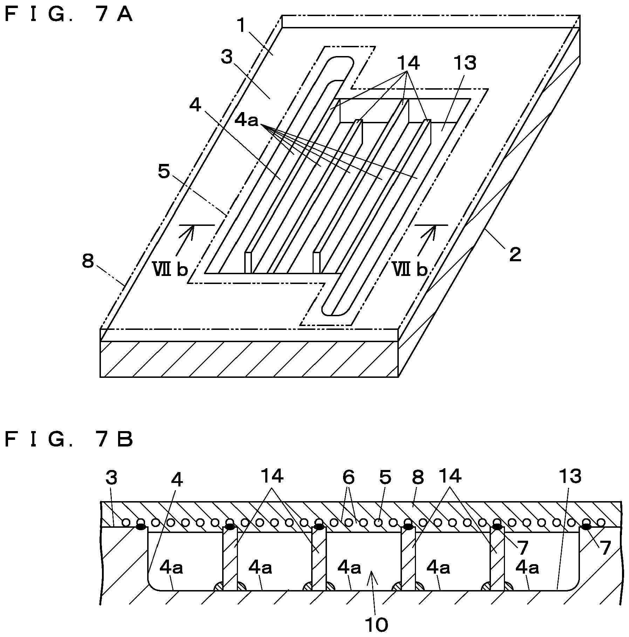

A mold of a sixth embodiment shown in FIGS. 7A and 7B is different from the first embodiment in the configuration of the groove and the method for forming the groove (this can also be implemented in the second embodiment) . In the groove forming step, the back surface 3 of the mold body 1 is machined to form a wide recess 13, and then a plurality of partition walls 14 are attached to the recess 13 to form a meandering groove 4 between the inner wall of the recess 13 and the partition walls 14 and between the partition walls 14. The wire mesh 5 has the shape of a wide strip. The wire mesh 5 is placed on the back surface 3 of the mold body 1 so as to continuously cover a plurality of groove elements 4a arranged next to each other by the meandering of the groove 4, and is temporarily fixed to the back surface 3 of the mold body 1 and the partition walls 14 by the spot welded portions 7. The inner surface of the electroformed metal 8 electrodeposited on the part of the wire mesh 5 which covers the groove 4 and the inner surface of the groove 4 form the inner surface of the meandering fluid passage 10.

Since the intervals at which the fluid passage 10 meanders are determined by the thickness of the partition walls 14, the intervals at which the fluid passage 10 meanders can be reduced by reducing the thickness of the partition walls 14. A metal sheet or a metal mesh may be used as the partition walls 14. In this case, the partition walls 14 can be fixed to the bottom of the recess 13 by welding (laser welding, spot welding, etc.). In the case of using a metal mesh, mesh openings in the metal mesh are closed by the electroformed metal 8 in the electroforming process .

### [Seventh Embodiment]

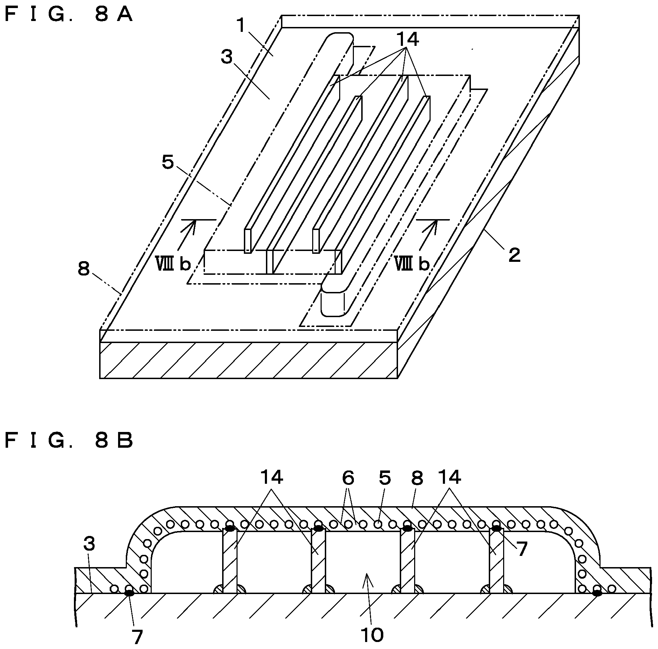

A mold of a seventh embodiment shown in FIGS. 8A and 8B is different from the third embodiment in the configuration of the fluid passage and the method for forming the fluid passage (this can also be implemented in the second embodiment) . A plurality of partition walls 14 are attached to the back surface 3 of the mold body 1. The partition walls 14 are as described in the sixth embodiment. The wire mesh 5 has the shape of a wide strip. The wire mesh 5 includes two contact portions placed in contact with the back surface 3 of the mold body 1 and temporarily fixed thereto by the spot welded portions 7 in the sheet placing step, and a wide curved portion located between the two contact portions and curved in a direction away from the mold body 1 in the sheet placing step. The wide curved portion contacts the ends of the plurality of partition walls 14 and is temporarily fixed thereto by the spot welded portions 7. The inner surface of the electroformed metal 8 electrodeposited on the wide curved portion, the side surfaces of the partition walls 14, and the back surface 3 of the mold body 1 form the inner surface of the meandering fluid passage 10.

### [Eighth Embodiment and its Modification]

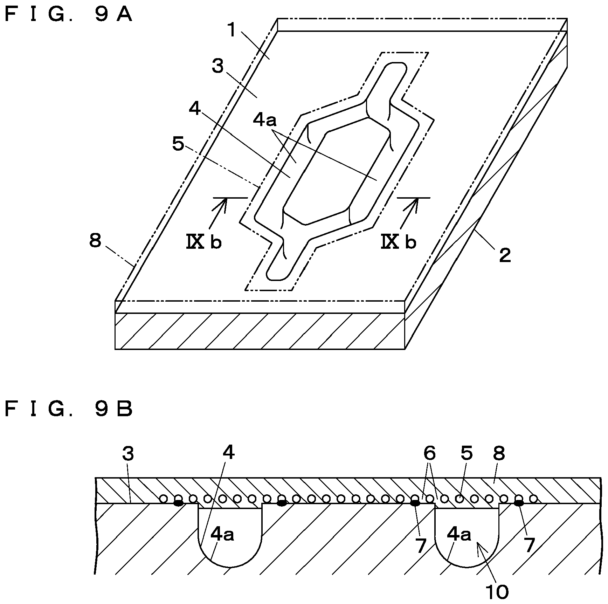

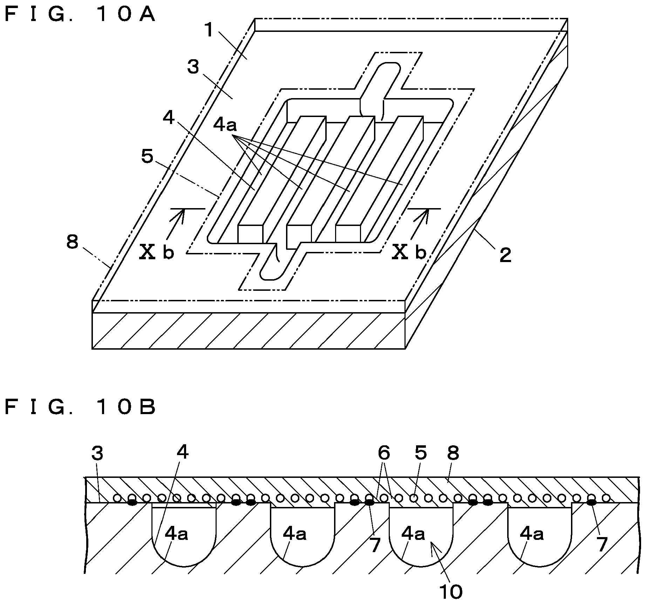

A mold of an eighth embodiment shown in FIGS. 9A and 9B is different from the first embodiment in that the meandering fluid passage in the first embodiment is replaced with a branched fluid passage 10 (this can also be implemented in the second embodiment) . The groove 4 is formed in the back surface 3 of the mold body 1 such that it splits into two groove elements 4a at an intermediate position and merges back into the single groove 4. The wire mesh 5 has the shape of a wide strip. The wire mesh 5 is placed on the back surface 3 of the mold body 1 so as to cover the two groove elements 4a, and is temporarily fixed to the back surface 3 of the mold body 1 on both sides of each groove element 4a by the spot welded portions 7. The inner surface of the electroformed metal 8 electrodeposited on the part of the wire mesh 5 which covers the groove 4 and the inner surface of the groove 4 form the inner surface of the fluid passage 10. As in a modification shown in FIGS. 10A and 10B, the groove 4 may branch into three or more groove elements (four groove elements in FIGS. 10A and 10B).

As described above, in the case of forming a branched fluid passage by using a metal pipe, a plurality of metal pipes is required and an operation of connecting the plurality of metal pipes is also required (FIG. 19). However, the branched fluid passage 10 can be easily formed by using the groove 4, the wire mesh 5, and the electroformed metal 8.

### [Ninth Embodiment]

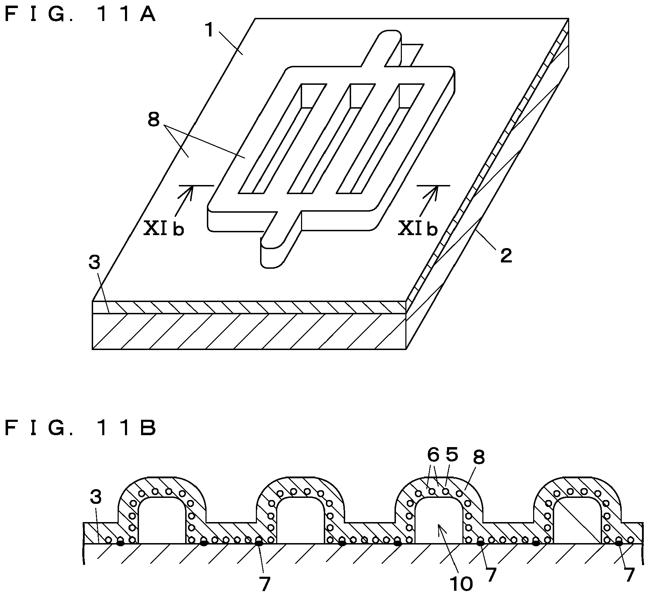

A mold of a ninth embodiment shown in FIGS. 11A and 11B is different form the fifth embodiment in that the meandering fluid passage in the fifth embodiment is replaced with a branched fluid passage 10 (this can also be implemented in the second embodiment) . The wire mesh 5 has the shape of a wide strip. The wire mesh 5 includes two contact portions placed in contact with the back surface 3 of the mold body 1 in the sheet placing step, and a curved portion located between the two contact portions and curved in a direction away from the mold body 1 in the sheet placing step. The curved portion is formed such that it splits into four branches at an intermediate position and merges back into the single curved portion as viewed in plan. The contact portions and the curved portions are alternately arranged in the lateral direction as viewed in section in FIG. 11B. The inner surface of the electroformed metal 8 electrodeposited on the curved portion and the back surface 3 of the mold body 1 form the branched fluid passage 10.

As described above, in the case of forming a branched fluid passage by using a metal pipe, a plurality of metal pipes and an operation of connecting the plurality of metal pipes are required (FIG. 19). However, the branched fluid passage 10 can be easily formed by using the wire mesh 5 and the electroformed metal 8.

### [Tenth Embodiment]

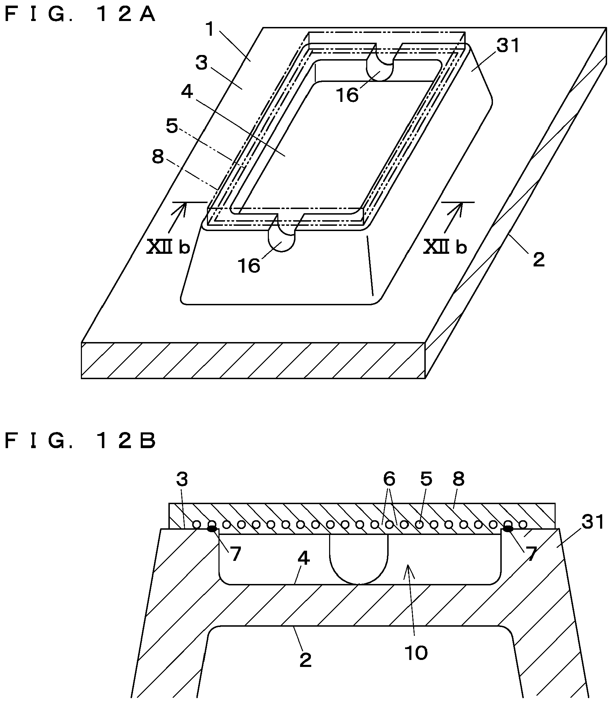

A mold of a tenth embodiment shown in FIGS. 12A and 12B is different from the first embodiment in that the meandering fluid passage in the first embodiment is replaced with a wide fluid passage 10 that contacts substantially the entire top surface of a projecting portion 31 formed in the back surface 3 of the mold body 1 (this can also be implemented in the second embodiment) . A wide groove 4 is formed in the top surface of the projecting portion 31 except for the peripheral edge of the top surface of the projecting portion 31, and recesses 16 are formed at both ends of the groove 4 so that an inlet pipe and an outlet pipe (not shown) are fitted in the recesses 16. The wire mesh 5 is placed on the top surface of the projecting portion 31 so as to flatly cover the groove 4, and is temporarily fixed to the top surface of the projecting portion 31 around the groove 4 by the spot weldedportions 7. The inner surface of the electroformed metal 8 electrodeposited on the part of the wire mesh 5 which covers the groove 4 and the inner surface of the groove 4 form the inner surface of the wide fluid passage 10.

According to the present embodiment, fluid for temperature control flows in the fluid passage 10 that contacts substantially the entire top surface of the projecting portion 31. Accordingly, the temperature of the entire top surface of the projecting portion 31 and its opposite surface, namely the front surface 2, can be more uniformly controlled.

### [Eleventh Embodiment]

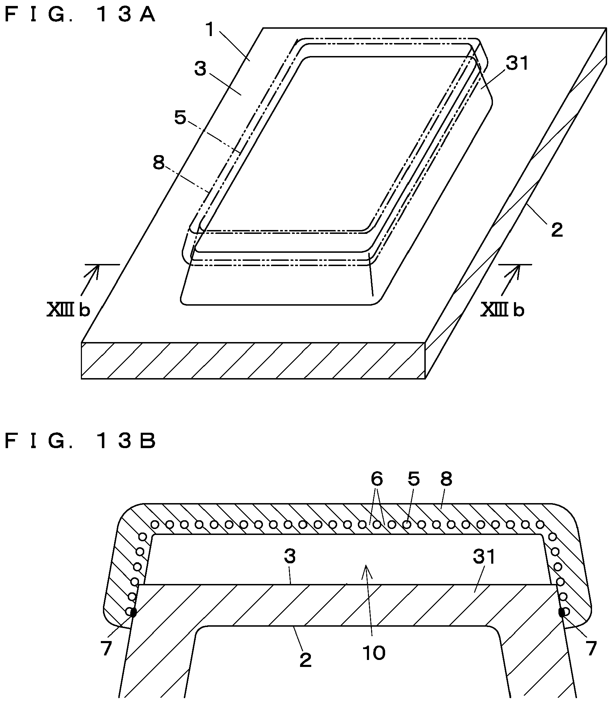

A mold of an eleventh embodiment shown in FIGS. 13A and 13B is different from the third embodiment in that the meandering fluid passage in the third embodiment is replaced with a wide fluid passage 10 that contacts substantially the entire top surface of a projecting portion 31 formed in the back surface 3 of the mold body 1 (this can also be implemented in the second embodiment) . The wire mesh 5 includes a peripheral contact portion (two contact portions as viewed in section) that contacts the side surface of the projecting portion 31, and a curved portion located between the two contact portions and curved in a direction away from the top surface of the projecting portion 31. The contact portion is temporarily fixed to the side surface of the projecting portion 31 by the spot welded portions 7. The inner surface of the electroformed metal 8 electrodeposited on the curved portion and the top surface of the projecting portion 31 form the inner surface of the fluid passage 10.

According to the present embodiment as well, fluid for temperature control flows in the fluid passage 10 that contacts substantially the entire top surface of the projecting portion 31. Accordingly, the temperature of the entire top surface of the projecting portion 31 and its opposite surface, namely the front surface 2, can be more uniformly controlled.

### [Twelfth Embodiment]

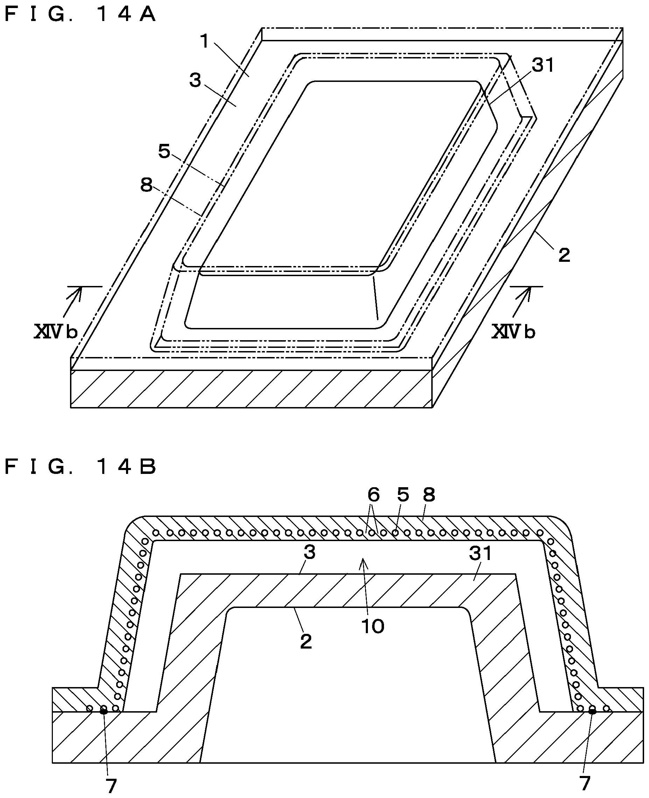

A mold of a twelfth embodiment shown in FIGS. 14A and 14B is different from the third embodiment in that the meandering fluid passage in the third embodiment is replaced with a fluid passage 10 that contacts substantially the entire back surface 3 of the mold body 1 (this can also be implemented in the second embodiment) . The wire mesh 5 includes a peripheral contact portion (two contact portions as viewed in section) that contacts a flat portion of the back surface 3, and a curved portion located between the two contact portions and curved in a direction away from the back surface 3. The contact portion is temporarily fixed to the flat portion of the back surface 3 by the spot welded portions 7. The inner surface of the electroformed metal 8 electrodeposited on the curved portion and substantially the entire back surface 3 of the mold body 1 form the inner surface of the fluid passage 10.

According to the present embodiment, fluid for temperature control flows in the fluid passage 10 that contacts substantially the entire back surface 3. Accordingly, the temperature of the entire back surface 3 and its opposite surface, namely the front surface 2, can be more uniformly controlled.

### [Thirteenth Embodiment]

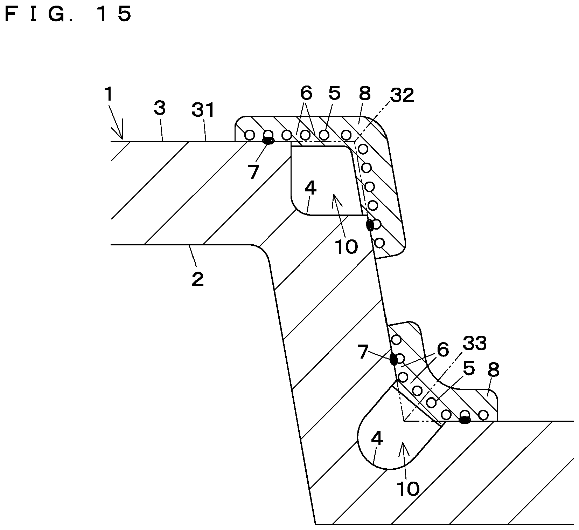

A mold of a thirteenth embodiment shown in FIG. 15 is different from the first embodiment in that, instead of or in addition to the meandering fluid passage in the first embodiment, fluid passages 10 are formed in a projecting corner 32 and a recessed corner 33 of a projecting portion 31 formed in the back surface 3 of the mold body 1 (this can also be implemented in the second embodiment). Grooves 4 are formed in the projecting corner 32 and the recessed corner 33. The wire mesh 5 is placed on the back surface 3 so as to flatly or curvedly cover the grooves 4, and is temporarily fixed to the back surface 3 on both sides of each groove 4 by the spot welded portions 7. The inner surface of the electroformed metal 8 electrodeposited on the parts of the wire mesh 5 which cover the grooves 4 and the inner surfaces of the grooves 4 form the inner surfaces of the fluid passages 10.

As described above, a metal pipe is less likely to conduct heat as it line-contacts the projecting corner and the recessed corner (FIG. 17). However, the fluid passages 10 of the present embodiment tend to conduct heat as they surface-contact the regions around the projecting corner 32 and the recessed corner 33 and are fixed thereto. Accordingly, high temperature control efficiency can be achieved.

### [Fourteenth Embodiment]

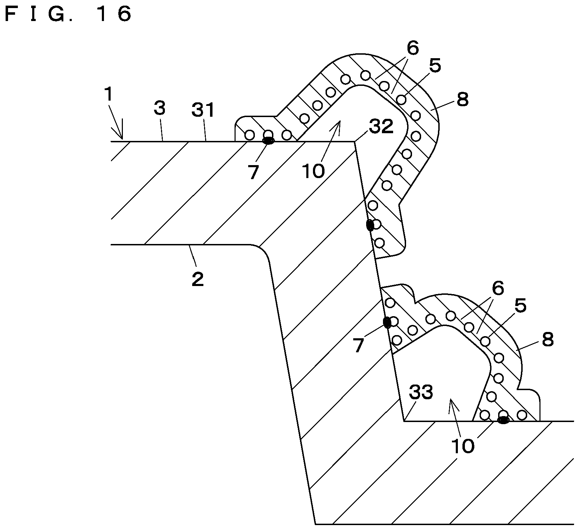

A mold of a fourteenth embodiment shown in FIG. 16 is different from the third embodiment in that, instead of or in addition to the meandering fluid passage in the third embodiment, fluid passages 10 are formed in a projecting corner 32 and a recessed corner 33 of a projecting portion 31 formed in the back surface 3 of the mold body 1 (this can also be implemented in the second embodiment). The wire mesh 5 includes two contact portions in contact with the back surface 3, and a curved portion located between the two contact portions and curved in a direction away from each corner 32, 33. The contact portions are temporarily fixed to the back surface 3 by the spot welded portions 7. The inner surface of the electroformed metal 8 electrodeposited on the curved portion and the back surface 3 around each corner 32, 33 form the inner surfaces of the fluid passages 10.

The fluid passages 10 of the present embodiment tend to conduct heat as they surface-contact the regions around the projecting corner 32 and the recessed corner 33 and are fixed thereto . Accordingly, high temperature control efficiency can be achieved.

The present invention is not limited to the above embodiments . For example, as described below, the present invention can be modified and embodied as appropriate without departing from the scope of the invention.
(1) The sectional area or the sectional shape of the fluid passage may be varied in the direction in which fluid flows in the fluid passage in order to vary the temperature control efficiency depending on the region of the mold. This is difficult to implement in the conventional metal pipes, but can be easily implemented in the present invention.
(2) In the tenth to twelfth embodiments, the curved portion of the wire mesh 5 may be made to contact a partition wall (not shown) attached to the back surface 3 of the mold body 1. This partition wall can support and reinforce the electroformed metal 8 electrodeposited on the curved portion.

A mold includes a mold body, a fluid passage through which fluid for temperature control flows, a porous conductive sheet and an electroformed metal. The porous conductive sheet is placed on a back surface of the mold body, has a plurality of through holes, and is conductive at least at its surface. The electroformed metal is electrodeposited on the back surface of the mold body and on the porous conductive sheet so as to fill and close the through holes of the porous conductive sheet. In the mold, an inner surface of the electroformed metal forms at least a part of an inner surface of the fluid passage.

## Claims

1. A mold having a mold body (1) and a fluid passage (10) through which fluid for temperature control flows, **characterized in that** the mold comprises:
a porous conductive sheet (5) placed on a back surface (3) of the mold body (1), having a plurality of through holes (6), and being conductive at least at its surface; and
an electroformed metal (8) electrodeposited on the back surface (3) of the mold body (1) and on the porous conductive sheet (5) so as to fill and close the through holes (6) of the porous conductive sheet (5), wherein
an inner surface of the electroformed metal (8) forms at least a part of an inner surface of the fluid passage (10).

2. The mold according to claim 1, wherein
a groove (4) is formed in the back surface (3) of the mold body (1), the porous conductive sheet (5) is placed on the back surface (3) of the mold body (1) so as to cover the groove (4), and the inner surface of the electroformed metal (8) electrodeposited on a part of the porous conductive sheet (5) which covers the groove (4) and an inner surface of the groove (4) form the inner surface of the fluid passage (10).

3. The mold according to claim 2, wherein
the part of the porous conductive sheet (5) which covers the groove (4) and the electroformed metal (8) electrodeposited on that part of the porous conductive sheet (5) have a flat shape.

4. The mold according to claim 2, wherein
the part of the porous conductive sheet (5) which covers the groove (4) and the electroformed metal (8) electrodeposited on that part of the porous conductive sheet (5) are curved in a direction away from the mold body (1).

5. The mold according to claim 1, wherein
the porous conductive sheet (5) includes two contact portions in contact with the back surface (3) of the mold body (1) and a curved portion located between the two contact portions and curved in a direction away from the mold body (1), and the inner surface of the electroformed metal (8) electrodeposited on the curved portion and curved in the direction away from the mold body (1) and the back surface (3) of the mold body (1) form the inner surface of the fluid passage (10).

6. The mold according to claim 5, wherein
the curved portion of the porous conductive sheet (5) is in contact with a partition wall (14) attached to the back surface (3) of the mold body (1).

7. The mold according to any one of claims 1 to 6, wherein
the fluid passage (10) is a meandering fluid passage (10) .

8. The mold according to any one of claims 1 to 6, wherein
the fluid passage (10) is a fluid passage (10) that splits into branches at an intermediate position.

9. The mold according to any one of claims 1 to 6, wherein
the fluid passage (10) is a fluid passage (10) that splits into branches at an intermediate position and merges back into the single fluid passage (10).

10. The mold according to any one of claims 1 to 6, wherein
the fluid passage (10) contacts substantially an entire predetermined surface of a projecting portion (31) formed in the back surface (3) of the mold body (1).

11. The mold according to any one of claims 1 to 6, wherein
the fluid passage (10) contacts substantially the entire back surface (3) of the mold body (1).

12. The mold according to any one of claims 1 to 6, wherein
the fluid passage (10) extends along a projecting corner (32) of a projecting portion (31) formed in the back surface (3) of the mold body (1).

13. The mold according to any one of claims 1 to 6, wherein
the fluid passage (10) extends along a recessed corner (33) of a projecting portion (31) formed in the back surface (3) of the mold body (1).

14. A method for manufacturing a mold having a mold body (1) and a fluid passage (10) through which fluid for temperature control flows, **characterized in that** the method comprises the steps of:
placing a porous conductive sheet (5) having a plurality of through holes (6) and being conductive at least at its surface on a back surface (3) of the mold body (1); and
performing electroforming to cause an electroformed metal (8) to be electrodeposited on the back surface (3) of the mold body (1) and on the porous conductive sheet (5) so as to fill and close the through holes (6) of the porous conductive sheet (5) so that an inner surface of the electroformed metal (8) forms at least a part of an inner surface of the fluid passage (10) .

15. The method according to claim 14, further comprising the step of:
forming, before the sheet placing step, a groove (4) in the back surface (3) of the mold body (1), wherein
in the sheet placing step, the porous conductive sheet (5) is placed on the back surface (3) of the mold body (1) so as to cover the groove (4), and
in the electroforming step, the inner surface of the electroformed metal (8) electrodeposited on a part of the porous conductive sheet (5) which covers the groove (4) and an inner surface of the groove (4) form the inner surface of the fluid passage (10) .

16. The method according to claim 15, wherein
in the groove forming step, the back surface (3) of the mold body (1) is machined to form the groove (4).

17. The method according to claim 15, wherein
in the groove forming step, the back surface (3) of the mold body (1) is machined to form a recess (13) and a partition wall (14) is attached to the recess (13) to form the groove (4).

18. The method according to claim 14, wherein
in the sheet placing step, the porous conductive sheet (5) is placed such that two contact portions of the porous conductive sheet (5) contact the back surface (3) of the mold body (1) and a portion of the porous conductive sheet (5) which is located between the contact portions is curved in a direction away from the mold body (1), and
in the electroforming step, the inner surface of the electroformed metal (8) electrodeposited on the curved portion of the porous conductive sheet (5) and curved in the direction away from the mold body (1) and the back surface (3) of the mold body (1) form the inner surface of the fluid passage (10).

19. The method according to claim 18, wherein
in the sheet placing step, the porous conductive sheet (5) is placed such that the curved portion of the porous conductive sheet (5) contacts a partition wall (14) attached to the back surface (3) of the mold body (1).

20. The method according to any one of claims 14 to 19, wherein
in the sheet placing step, the porous conductive sheet (5) is temporarily fixed to the back surface (3) of the mold body (1) .

## Patentansprüche

1. Form mit einem Formkörper (1) und einem Fluidkanal (10), durch den ein Fluid zur Temperatursteuerung strömt, **dadurch gekennzeichnet, dass** die Form Folgendes aufweist:
eine poröse leitfähige Platte (5), die an einer Rückfläche (3) des Formkörpers (1) platziert ist, eine Vielzahl von Durchgangslöchern (6) hat und mindestens an deren Oberfläche leitfähig ist; und
ein galvanogeformtes Metall (8), das an der Rückfläche (3) des Formkörpers (1) und an der porösen leitfähigen Platte (5) aufgalvanisiert ist, um die Durchgangslöcher (6) der porösen leitfähigen Platte (5) zu füllen und zu schließen, wobei
eine Innenfläche des galvanogeformten Metalls (8) mindestens einen Teil einer Innenfläche des Fluidkanals (10) ausbildet.

2. Form gemäß Anspruch 1, wobei
eine Nut (4) in der Rückfläche (3) des Formkörpers (1) ausgebildet ist, die poröse leitfähige Platte (5) an der Rückfläche (3) des Formkörpers (1) platziert ist, um die Nut (4) abzudecken, und die Innenfläche des galvanogeformten Metalls (8), das an einem Teil der porösen leitfähigen Platte (5), der die Nut (4) abdeckt, aufgalvanisiert ist, und eine Innenfläche der Nut (4) die Innenfläche des Fluidkanals (10) ausbilden.

3. Form gemäß Anspruch 2, wobei
der Teil der porösen leitfähigen Platte (5), der die Nut (4) abdeckt, und das galvanogeformten Metall (8), das an diesem Teil der porösen leitfähigen Platte (5) aufgalvanisiert ist, eine flache Form haben.

4. Form gemäß Anspruch 2, wobei
der Teil der porösen leitfähigen Platte (5), der die Nut (4) abdeckt, und das galvanogeformten Metall (8), das an diesem Teil der porösen leitfähigen Platte (5) aufgalvanisiert ist, in eine Richtung weg von dem Formkörper (1) gekrümmt sind.

5. Form gemäß Anspruch 1, wobei
die poröse leitfähige Platte (5) zwei Kontaktabschnitte, die mit der Rückfläche (3) des Formkörpers (1) in Kontakt sind, und einen gekrümmten Abschnitt enthält, der zwischen den zwei Kontaktabschnitten gelegen ist und in eine Richtung weg von dem Formkörper (1) gekrümmt ist, und die Innenfläche des galvanogeformten Metalls (8), das an dem gekrümmten Abschnitt aufgalvanisiert ist und in die Richtung weg von dem Formkörper (1) gekrümmt ist, und die Rückfläche (3) des Formkörpers (1) die Innenfläche des Fluidkanals (10) ausbilden.

6. Form gemäß Anspruch 5, wobei
der gekrümmte Abschnitt der porösen leitfähigen Platte (5) in Kontakt mit einer Trennwand (14) ist, die an der Rückfläche (3) des Formkörpers (1) angebracht ist.

7. Form gemäß einem der Ansprüche 1 bis 6, wobei
der Fluidkanal (10) ein sich schlängelnder Fluidkanal (10) ist.

8. Form gemäß einem der Ansprüche 1 bis 6, wobei
der Fluidkanal (10) ein Fluidkanal (10) ist, der sich an einem Zwischenabschnitt in Zweige aufteilt.

9. Form gemäß einem der Ansprüche 1 bis 6, wobei
der Fluidkanal (10) ein Fluidkanal (10) ist, der sich an einem Zwischenabschnitt in Zweige aufteilt und in den einzelnen Fluidkanal (10) zurück vereinigt.

10. Form gemäß einem der Ansprüche 1 bis 6, wobei
der Fluidkanal (10) im Wesentlichen eine gesamte vorbestimmte Fläche eines vorstehenden Abschnitts (31) kontaktiert, der in der Rückfläche (3) des Formkörpers (1) ausgebildet ist.

11. Form gemäß einem der Ansprüche 1 bis 6, wobei
der Fluidkanal (10) im Wesentlichen die gesamte Rückfläche (3) des Formkörpers (1) kontaktiert.

12. Form gemäß einem der Ansprüche 1 bis 6, wobei
sich der Fluidkanal (10) entlang einer vorspringenden Ecke (32) eines vorstehenden Abschnitts (31) erstreckt, der in der Rückfläche (3) des Formkörpers (1) ausgebildet ist.

13. Form gemäß einem der Ansprüche 1 bis 6, wobei
sich der Fluidkanal (10) entlang einer zurückspringenden Ecke (33) eines vorstehenden Abschnitts (31) erstreckt, der in der Rückfläche (3) des Formkörpers (1) ausgebildet ist.

14. Verfahren zum Herstellen einer Form mit einem Formkörper (1) und einem Fluidkanal (10), durch den Fluid zur Temperatursteuerung strömt, **dadurch gekennzeichnet, dass** das Verfahren die folgenden Schritte aufweist:
Platzieren einer porösen leitfähigen Platte (5), die eine Vielzahl von Durchgangslöchern (6) hat und mindestens an deren Oberfläche leitfähig ist, an einer Rückfläche (3) des Formkörpers (1); und
Durchführen eines Galvanoformens, um zu bewirken, dass ein galvanogeformtes Metall (8) an der Rückfläche (3) des Formkörpers (1) und an der porösen leitfähigen Platte (5) aufgalvanisiert wird, um die Durchgangslöcher (6) der porösen leitfähigen Platte (5) zu füllen und zu schließen, sodass eine Innenfläche des galvanogeformten Metalls (8) mindestens einen Teil einer Innenfläche des Fluidkanals (10) ausbildet.

15. Verfahren gemäß Anspruch 14, des Weiteren mit dem folgenden Schritt:
Ausbilden einer Nut (4) in der Rückfläche (3) des Formkörpers (1) vor dem Plattenplatzierungsschritt, wobei
bei dem Plattenplatzierungsschritt die poröse leitfähige Platte (5) an der Rückfläche (3) des Formkörpers (1) platziert wird, um die Nut (4) abzudecken, und
bei dem Galvanoformschritt die Innenfläche des galvanogeformten Metalls (8), das an einem Teil der porösen leitfähigen Platte (5), der die Nut (4) abdeckt, aufgalvanisiert ist, und eine Innenfläche der Nut (4) die Innenfläche des Fluidkanals (10) ausbilden.

16. Verfahren gemäß Anspruch 15, wobei
bei dem Nutausbildungsschritt die Rückfläche (3) des Formkörpers (1) bearbeitet wird, um die Nut (4) auszubilden.

17. Verfahren gemäß Anspruch 15, wobei
bei dem Nutausbildungsschritt die Rückfläche (3) des Formkörpers (1) bearbeitet wird, um eine Vertiefung (13) auszubilden, und eine Trennwand (14) an der Vertiefung (13) angebracht wird, um die Nut (4) auszubilden.

18. Verfahren gemäß Anspruch 14, wobei
bei dem Plattenplatzierungsschritt die poröse leitfähige Platte (5) derart platziert wird, dass zwei Kontaktabschnitte der porösen leitfähigen Platte (5) die Rückfläche (3) des Formkörpers (1) kontaktieren, und ein Abschnitt der porösen leitfähigen Platte (5), der zwischen den Kontaktabschnitten gelegen ist, in eine Richtung weg von dem Formkörper (1) gekrümmt ist, und
bei dem Galvanoformschritt die Innenfläche des galvanogeformten Metalls (8), das an dem gekrümmten Abschnitt der porösen leitfähigen Platte (5) aufgalvanisiert und in die Richtung weg von dem Formkörper (1) gekrümmt ist, und die Rückfläche (3) des Formkörpers (1) die Innenfläche des Fluidkanals (10) ausbilden.

19. Verfahren gemäß Anspruch 18, wobei
bei dem Plattenplatzierungsschritt die poröse leitfähige Platte (5) derart platziert wird, dass der gekrümmte Abschnitt der porösen leitfähigen Platte (5) eine Trennwand (14) kontaktiert, die an der Rückfläche (3) des Formkörpers (1) angebracht ist.

20. Verfahren gemäß einem der Ansprüche 14 bis 19, wobei
bei dem Plattenplatzierungsschritt die poröse leitfähige Platte (5) an der Rückfläche (3) des Formkörpers (1) vorläufig fixiert wird.

## Revendications

1. Moule ayant un corps de moule (1) et un passage de fluide (10) à travers lequel s'écoule le fluide pour la régulation de température, **caractérisé en ce que** le moule comprend :
une feuille conductrice poreuse (5) placée sur une surface arrière (3) du corps mobile (1), ayant une pluralité de trous débouchants (6) et étant conductrice au moins au niveau de sa surface ; et
un métal électroformé (8) déposé par voie galvanique sur la surface arrière (3) du corps de moule (1) et sur la feuille conductrice poreuse (5) afin de remplir et fermer les trous débouchants (6) de la feuille conductrice poreuse (5), dans lequel :
une surface interne du métal électroformé (8) forme au moins une partie d'une surface interne du passage de fluide (10) .

2. Moule selon la revendication 1, dans lequel :
une rainure (4) est formée dans la surface arrière (3) du corps de moule (1), la feuille conductrice poreuse (5) est placée sur la surface arrière (3) du corps de moule (1) afin de recouvrir la rainure (4), et la surface interne du métal électroformé (8) déposé par voie galvanique sur une partie de la feuille conductrice poreuse (5) qui recouvre la rainure (4) et une surface interne de la rainure (4) forment la surface interne du passage de fluide (10).

3. Moule selon la revendication 2, dans lequel :
la partie de la feuille conductrice poreuse (5) qui recouvre la rainure (4) et le métal électroformé (8) déposé par voie galvanique sur cette partie de la feuille conductrice poreuse (5) ont une forme plate.

4. Moule selon la revendication 2, dans lequel :
la partie de la feuille conductrice poreuse (5) qui recouvre la rainure (4) et le métal électroformé (8) déposé par voie galvanique sur cette partie de la feuille conductrice poreuse (5) sont incurvés dans une direction à distance du corps de moule (1).

5. Moule selon la revendication 1, dans lequel :
la feuille conductrice poreuse (5) comprend deux parties de contact en contact avec la surface arrière (3) du corps de moule (1) et une partie incurvée positionnée entre les deux parties de contact et incurvée dans une direction à distance du corps de moule (1), et la surface interne du métal électroformé (8) déposé par voie galvanique sur la partie incurvée et incurvée dans la direction à distance du corps de moule (1) et la surface arrière (3) du corps de moule (1) forment la surface interne du passage de fluide (10).

6. Moule selon la revendication 5, dans lequel :
la partie incurvée de la feuille conductrice poreuse (5) est en contact avec une paroi de séparation (14) fixée à la surface arrière (3) du corps de moule (1).

7. Moule selon l'une quelconque des revendications 1 à 6, dans lequel :
le passage de fluide (10) est un passage de fluide à méandres (10).

8. Moule selon l'une quelconque des revendications 1 à 6, dans lequel :
le passage de fluide (10) est un passage de fluide (10) qui se partage en branches dans une position intermédiaire.

9. Moule selon l'une quelconque des revendications 1 à 6, dans lequel :
le passage de fluide (10) est un passage de fluide (10) qui se partage en branches dans une position intermédiaire et se transforme à nouveau en un seul passage de fluide (10).

10. Moule selon l'une quelconque des revendications 1 à 6, dans lequel :
le passage de fluide (10) est sensiblement en contact avec toute une surface prédéterminée d'une partie en saillie (31) formée dans la surface arrière (3) du corps de moule (1).

11. Moule selon l'une quelconque des revendications 1 à 6, dans lequel :
le passage de fluide (10) est sensiblement en contact avec toute la surface arrière (3) du corps de moule (1).

12. Moule selon l'une quelconque des revendications 1 à 6, dans lequel :
le passage de fluide (10) s'étend le long d'un coin en saillie (32) d'une partie en saillie (31) formée dans la surface arrière (3) du corps de moule (1).

13. Moule selon l'une quelconque des revendications 1 à 6 ; dans lequel :
le passage de fluide (10) s'étend le long d'un coin évidé (33) d'une partie en saillie (31) formée dans la surface arrière (3) du corps de moule (1).

14. Procédé pour fabriquer un moule ayant un corps de moule (1) et un passage de fluide (10) à travers lequel s'écoule un fluide pour la régulation de température, **caractérisé en ce que** le procédé comprend les étapes suivantes :
placer une feuille conductrice poreuse (5) ayant une pluralité de trous débouchants (6) et étant conductrice au moins au niveau de sa surface sur une surface arrière (3) du corps de moule (1) ; et
réaliser l'électroformage pour amener le métal électroformé (8) à être déposé par voie galvanique sur la surface arrière (3) du corps de moule (1) et sur la feuille conductrice poreuse (5) afin de remplir et de fermer les trous débouchants (6) de la feuille conductrice poreuse (5) de sorte qu'une surface interne du métal électroformé (8) forme au moins une partie d'une surface interne du passage de fluide (10) .

15. Procédé selon la revendication 14, comprenant en outre l'étape suivante :
former, avant l'étape de mise en place de la feuille, une rainure (4) dans la surface arrière (3) du corps de moule (1), dans lequel :
à l'étape de mise en place de la feuille, la feuille conductrice poreuse (5) est placée sur la surface arrière (3) du corps de moule (1) afin de recouvrir la rainure (4), et
à l'étape d'électroformage, la surface interne du métal électroformé (8) déposé par voie galvanique sur une partie de la feuille conductrice poreuse (5) qui recouvre la rainure (4) et une surface interne de la rainure (4) forment la surface interne du passage de fluide (10).

16. Procédé selon la revendication 15, dans lequel :
à l'étape de formage de la rainure, la surface arrière (3) du corps de moule (1) est usinée afin de former la rainure (4) .

17. Procédé selon la revendication 15, dans lequel :
à l'étape de formage de la rainure, la surface arrière (3) du corps de moule (1) est usinée afin de former un évidement (13) et une paroi de séparation (14) est fixée à l'évidement (13) afin de former la rainure (4).

18. Procédé selon la revendication 14, dans lequel :
à l'étape de mise en place de la feuille, la feuille conductrice poreuse (5) est placée de sorte que deux parties de contact de la feuille conductrice poreuse (5) sont en contact avec la surface arrière (3) du corps de moule (1) et une partie de la feuille conductrice poreuse (5) qui est positionnée entre les parties de contact, est incurvée dans une direction à distance du corps de moule (1), et
à l'étape d'électroformage, la surface interne du métal électroformé (8) déposé par voie galvanique sur la partie incurvée de la feuille conductrice poreuse (5) et incurvée dans la direction à distance du corps de moule (1) et la surface arrière (3) du corps de moule (1) forment la surface interne du passage de fluide (10).

19. Procédé selon la revendication 18, dans lequel :
à l'étape de mise en place de la feuille, la feuille conductrice poreuse (5) est placée de sorte que la partie incurvée de la feuille conductrice poreuse (5) est en contact avec une paroi de séparation (14) fixée sur la surface arrière (3) du corps de moule (1).

20. Procédé selon l'une quelconque des revendications 14 à 19, dans lequel :
à l'étape de mise en place de la feuille, la feuille conductrice poreuse (5) est temporairement fixée sur la surface arrière (3) du corps de moule (1).
